# EUROPÄISCHE PATENTSCHRIFT

(11) **EP 3 548 254 B1**
(45) Veröffentlichungstag und Bekanntmachung des Hinweises auf die Patenterteilung: **28.04.2021**
(21) Anmeldenummer: 17800474.3
(22) Anmeldetag: 08.11.2017
(51) Int. Cl.: B29C 48/92, B60C 19/08, B29D 30/52, G01N 27/04, B29C 48/21, B29C 48/49, B29K 105/00

(54) **VERFAHREN ZUM HERSTELLEN EINES LAUFSTREIFENS UND LAUFSTREIFEN-HERSTELLVORRICHTUNG**
METHOD FOR PRODUCING A TREAD STRIP AND A STRIP MANUFACTURING DEVICE
PROCÉDÉ DE FABRICATION D'UNE BANDE DE BANDE DE ROULEMENT ET SON DISPOSITIF DE FABRICATION

(30) Priorität: 02.12.2016 DE 102016123339; 26.04.2017 DE 102017108943
(43) Veröffentlichungstag der Anmeldung: 09.10.2019
(73) Patentinhaber: KraussMaffei Extrusion GmbH, 30625 Hannover (DE)
(72) Erfinder: RUPPRECHT, Marko, 31191 Algermissen (DE); REINEFAHL, Jörg, 30916 Isernhagen (DE)
(74) Vertreter: Krauss, Philipp
(86) Internationale Anmeldenummer: PCT/EP2017/078639
(87) Internationale Veröffentlichungsnummer: WO 2018/099704

(56) Entgegenhaltungen:
- EP-A2- 1 083 425
- JP-A- H11 151 907
- US-A1- 2014 283 964
- US-A1- 2015 241 491

## Beschreibung

Die Erfindung betrifft ein Verfahren zum Herstellen eines Laufstreifens, mit den Schritten (a) Extrudieren eines Laufstreifens, der eine Außenseite und eine der Außenseite gegenüberliegende Innenseite hat und einen Tragbereich aus einem Tragbereich-Kautschukmaterial und einen Leitstreifen aus einem Leitstreifen-Kautschukmaterial aufweist, wobei (b) sich der Leitstreifen von der Außenseite zur Innenseite erstreckt und ein spezifischer elektrischer Leitstreifen-Widerstand des Leitstreifen-Kautschukmaterials kleiner ist als ein spezifischer elektrischer Tragbereich-Widerstand des Tragbereich-Kautschukmaterials. Gemäß einem zweiten Aspekt betrifft die Erfindung eine Laufstreifen-Herstellvorrichtung zum Herstellen eines Laufstreifens mit einer Extruderanlage, der ausgebildet ist zum Herstellen eines Laufstreifens, der eine Außenseite und eine der Außenseite gegenüberliegende Innenseite hat und einen Tragbereich aus einem Tragbereich-Kautschukmaterial und einen Leitstreifen aus einem Leitstreifen-Kautschukmaterial aufweist, wobei sich der Leitstreifen von der Außenseite zur Innenseite erstreckt.

Derartige Laufstreifen werden bei der Herstellung von Fahrzeugreifen, insbesondere von Pkw-Reifen und Lkw-Reifen, verwendet. Um den Rollwiderstand zu verringern, wird das Tragbereich-Kautschukmaterial häufig aus Kautschuk und Siliziumdioxid (engl.: silica) hergestellt, wohingegen wenig oder kein Ruß enthalten ist. Das Tragbereich-Kautschukmaterial hat daher einen sehr hohen spezifischen elektrischen Widerstand und ist häufig ein Isolator. Damit die Reifen sich beim Abrollen nicht elektrostatisch aufladen, wird der Leitstreifen vorgesehen. Dieser ist so angeordnet, dass er dann, wenn das betreffende Fahrzeug auf der Straße steht, einen elektrischen Kontakt zwischen der Straßenoberfläche und einer Komponente des Reifens herstellt, die über einen elektrischen Pfad mit dem Chassis des Fahrzeugs verbunden ist, der so klein ist, dass elektrostatische Aufladungen vermieden werden.

Es hat sich jedoch herausgestellt, dass auch Reifen zu elektrostatischer Aufladung neigen können, die einen derartigen Leitstreifen aufweisen.

Beispielsweise beschreibt die US 2014/0283964 A1 ein Verfahren zum Herstellen eines Laufstreifens, wobei der Laufstreifen mehrere Schichten mit unterschiedlichen elektrischen Laufstreifen-Widerständen aufweist.

Ferner beschreibt die EP 1 083 425 A2 ein Verfahren zur On-Line Überwachung von Rohreifenbestandteilen.

Weiterer technologischer Hintergrund kann der JP H11 151907 A und der US 2015/241491 A1 entnommen werden.

Der Erfindung liegt die Aufgabe zugrunde, die elektrostatische Aufladung an Fahrzeugen mit Reifen zu vermindern.

Die Erfindung löst das Problem durch ein gattungsgemäßes Verfahren, das die Schritte (c) Ermitteln eines Parameters, der zu einem elektrischen Leitstreifen-Widerstands des

Leitstreifens zwischen der Außenseite und der Innenseite korreliert, und (d) wobei das Ermitteln des Parameters den Schritt Aufbringen einer elektrostatischen Ladung auf einer Seite umfasst, wobei das Aufbringen der elektrostatischen Ladung berührungslos erfolgt und (f) Ausgeben eines Warnsignals, wenn der Parameter einen Wert annimmt, der anzeigt, dass der Leitstreifen-Widerstand W₂₈ einen vorgegebenen Maximal-Wert überschreitet, umfasst. Insbesondere erfolgt das Ausgeben des Warnsignals, wenn der Parameter den vorgegebenen Maximal-Wert überschreitet.

Insbesondere ist der Parameter ein elektrischer Strom, der beim Aufladen des Laufstreifens mit einer vorgegebenen elektrischen Ladung fließt, und der Maximal-Wert ist überschritten, wenn der elektrische Strom einen vorgegebenen Minimal-Wert unterschreitet. Alternativ ist der Parameter eine elektrische Spannung, die beim Anlegen eines vorgegebenen elektrischen Stroms entsteht, und der Maximal-Wert ist eine Maximal-Spannung. Wiederum alternativ ist der Parameter der elektrische Leitstreifen-Widerstand selbst und der Maximal-Wert ist ein elektrischer Maximal-Widerstand.

Gemäß einem zweiten Aspekt löst die Erfindung das Problem durch eine gattungsgemäße Laufstreifen-Herstellvorrichtung, die eine Widerstands-Ermittlungsvorrichtung aufweist, die eine Außenelektrode, die angeordnet ist zum Kontaktieren der Außenseite des Laufstreifens und eine Innenelektrode, die angeordnet ist zum Kontaktieren der Innenseite des Laufstreifens, aufweist. Vorzugsweise ist die Widerstands-Ermittlungsvorrichtung ausgebildet zum automatischen Messen eines Parameters, der zu einem Leitstreifen-Widerstand des Leitstreifens zwischen der Außenseite und der Innenseite korreliert.

Vorteilhaft an der Erfindung ist, dass eine hinreichend hohe elektrische Leitfähigkeit des Leitstreifens sichergestellt ist. Es hat sich nämlich überraschend herausgestellt, dass der Leitstreifen durch Schwankungen im Produktionsverlauf eine geometrisehe Struktur haben kann, die zu einem zu hohen elektrischen Widerstand führt. Tritt ein solcher Fall auf, kann dieser nun schnell erkannt werden. Der entsprechende Abschnitt des Laufstreifens kann ausgesondert werden.

Vorteilhaft ist zudem, dass die Messung mit einem kleinen technischen Aufwand möglich ist. Der Laufstreifen verlässt die Extruderanlage stets in der gleichen Ausrichtung, sodass der Leitstreifen stets an der gleichen Stelle liegt. Dieser kann daher leicht elektrisch kontaktiert werden.

Im Rahmen der vorliegenden Beschreibung ist unter dem Parameter insbesondere jeder Wert oder jede Größe zu verstehen, anhand dessen auf den elektrischen Widerstand geschlossen werden kann. Beispielsweise ist der Parameter ein elektrischer Strom, eine elektrische Spannung oder ein digitales Signal, das die entsprechende Größe oder den entsprechenden Wert kodiert.

Unter dem Leitstreifen-Widerstand ist insbesondere derjenige Widerstand zu verstehen, der am Ort der Messung ermittelt wird. Beim Leitstreifen handelt es sich um einen - zumindest theoretisch - quasi unendlich ausgedehnten Bereich. Gemessen wird jedoch stets an einem endlichen Abschnitt des Leitstreifens. Der Leitstreifen-Widerstand ist damit insbesondere der Widerstand desjenigen Bereichs des Leitstreifens, an dem die Messung durchgeführt wird. Der Leitstreifen-Widerstand kann daher als längenspezifischer Widerstand angesehen werden.

Unter dem Merkmal, dass der Parameter zum Leitstreifen-Widerstand korreliert, wird insbesondere verstanden, dass anhand des Parameters die Aussage möglich ist, ob der Leitstreifen funktionstüchtig ist oder nicht.

Gemäß einer bevorzugten Ausführungsform umfasst das Ermitteln des elektrischen Widerstands die Schritte eines Kontaktierens der Außenseite mittels einer AußenElektrode und des Kontaktierens der Innenseite des Laufstreifens mit einer InnenElektrode, wobei eine der Elektroden den Laufstreifen von oben kontaktiert. Nach dem Austreten aus der Extruderanlage liegt der Laufstreifen häufig flach auf einer Fördervorrichtung. In diesem Zustand kann der Leitstreifen besonders einfach elektrisch kontaktiert werden.

Unter dem Kontaktieren wird insbesondere verstanden, dass elektrische Ladungen auf den Leitstreifen aufgebracht und wieder abgeführt werden. Es ist möglich und stellt die erfinderische Ausführungsform dar, dass das Kontaktieren berührungslos erfolgt. Hierunter ist zu verstehen, dass zwischen der Elektrode, die die elektrischen Landungen abgibt, und dem Laufstreifen ein von null verschiedener Abstand existiert. Insbesondere ist dieser Abstand größer als 0,5 Millimeter, insbesondere größer als 1 Millimeter.

Das Ermitteln des elektrischen Widerstands umfasst vorzugsweise ein Anlegen einer elektrischen Spannung, insbesondere einer Gleichspannung, einer Wechselspannung, beispielsweise mit einer Frequenz zwischen 1 Hertz und 100 Kilohertz, oder einer Spannung mit einem Gleichspannungs- und einem Wechselspannungsanteil, an die Elektroden und ein Messen des resultierenden elektrischen Stroms.

Vorzugsweise ist die Spannung eine Gleichspannung von zumindest 1000 Volt, insbesondere zumindest 3000 Volt. In diesem Fall ist es günstig, wenn ein Abstand der Elektrode von dem Laufstreifen zumindest 2 mm, insbesondere zumindest 5 mm beträgt. Das vermindert das Risiko eines Kontakts der Elektrode mit dem Laufstreifen. Vorzugsweise beträgt der Abstand höchstens 10 cm, insbesondere höchstens 8 cm. Vorteilhaft an der hohen Spannung ist, dass die Funktionsweise des Leitstreifens besonders gut überprüft werden kann und der Spannungssituation eines Reifens gut entspricht.

Wenn der Laufstreifen, wie gemäß einer bevorzugten Ausführungsform vorgesehen, geerdet ist und/oder auf einer geerdeten Fördervorrichtung aufliegt, so wird eine, insbesondere die der Elektrode zugewandte, Seite des Laufstreifens elektrostatisch aufgeladen. Die Aufladung kann mit positiver oder negativer Ladung erfolgen. Es kann zudem die Außenseite oder die Innenseite elektrostatisch aufgeladen werden.

Das elektrostatische Aufladen bewirkt einen elektrischen Strom I, der auch als Ladestrom bezeichnet werden kann und besonders groß ist, wenn der Leitstreifen korrekt ausgebildet ist. Ist der Laufstreifen nicht funktionstüchtig, so wird die elektrische Ladung nicht abgeführt. Dadurch steigt die Ladung auf der Oberfläche des Laufstreifens schnell an, sodass sich ein elektrisches Feld bildet, das dem Übertritt weiterer Ladungsträger auf die Oberfläche des Laufstreifens entgegenwirkt. Der von der Elektrode abgegebene Strom sinkt daher.

Wird -wie gemäß einer bevorzugten Ausführungsform vorgesehen- die Spannung, insbesondere mittels einer Auswerteschaltung, zwischen der Elektrode (Innen-Elektrode oder Außen-Elektrode) und dem Laufstreifen geregelt, so zeigt ein Abfallen des elektrischen Stroms, dass der Leitstreifen nicht korrekt ausgebildet ist. Der elektrische Strom kann daher als Parameter verwendet werden, der anzeigt, ob der Leitstreifen korrekt ausgebildet ist. Vorzugsweise wird die Spannung auf einen konstanten Soll-Spannungswert geregelt, Es ist aber auch möglich, dass die Spannung auf einen zeitlich variierenden Soll-Spannungswert geregelt wird.

Wird -wie gemäß einer alternativ bevorzugten Ausführungsform vorgesehen- der Strom, insbesondere mittels einer Auswerteschaltung, zwischen der Elektrode (Innen-Elektrode oder Außen-Elektrode) und dem Laufstreifen, insbesondere auf einen konstanten Soll-Stromwert, geregelt, so zeigt ein Ansteigen der elektrischen Spannung U, dass der Leitstreifen nicht korrekt ausgebildet ist, da die Ladungen nicht durch den Leitstreifen abfließen können. Die elektrische Spannung U kann daher als Parameter verwendet werden, der anzeigt, ob der Leitstreifen korrekt ausgebildet ist. Es ist auch möglich, dass der Strom auf einen zeitlich variierenden Soll-Stromwert geregelt wird.

Alternativ beträgt die Spannung zumindest 1 Volt und höchstens 1000 Volt. Es kann sich auch um Wechselspannung handeln.

Vorzugsweise besitzt die Elektrode, mit der die Ladung aufgebracht wird, eine Emissionskante. Unter der Emissionskante wird insbesondere ein Bereich der Elektrode verstanden, der einen so kleinen Krümmungsradius hat, dass beim Anlagen einer elektrischen Spannung an die Elektrode relativ zum Laufstreifen Elektroden emittiert oder aufgenommen werden. Vorzugsweise ist die Emissionskante zumindest 3 mm breit. Die Breite der Emissionskante bezieht sich auf deren Erstreckungsrichtung. Die Emissionskante hat den Vorteil, dass die Ladungen nicht von einer punktförmigen, sondern von einer länglichen Quelle abgegeben werden. Das ermöglicht es, wie gemäß einer bevorzugten Ausführungsform vorgesehen, die Elektrode so auszurichten, dass sie sich quer zum Leitstreifen erstreckt. In anderen Worten beträgt ein Winkel zwischen der Emissionskante und dem Leitstreifen höchstens α=50°, vorzugsweise höchstens 25°.

Besonders günstig ist es, wenn die Elektrode so drehbar ausgebildet ist, dass eine effektive Breite der Elektrode veränderbar ist. Die effektive Breite der Elektrode ist die Projektion der Elektrode auf eine Ebene, die senkrecht auf der Bewegungsrichtung des Laufstreifens steht.

Vorzugsweise umfasst das Verfahren den Schritt eines Entladens des Laufstreifens. Das kann beispielsweise mittels einer geerdeten Elektrode erfolgen, die berührend oder berührungslos in den Laufstreifen in Materialflussrichtung hinter der Elektrode zum Aufbringen der Ladung angeordnet ist.

Alternativ oder zusätzlich umfasst das Ermitteln des elektrischen Widerstands vorzugsweise ein Anlegen eines elektrischen Stroms, insbesondere eines Gleichstroms, eines Wechselstroms, beispielsweise mit einer Frequenz zwischen 1 Hertz und 100 Kilohertz, oder eines Stroms mit einem Gleichstrom- und einem Wechselstromanteil, an die Elektroden und ein Messen der resultierenden elektrischen Spannung. Besonders günstig ist es, wenn der Widerstand, beispielsweise mittels einer Wheatstoneschen Brücke, zumindest quasi stromfrei gemessen wird. Günstig ist es, wenn die durch die Messung in den Laufsteifen eingebrachte elektrische Leistung höchstens 3 Watt beträgt.

Besonders günstig ist, wenn ein Abstand zwischen einer Austrittsöffnung der Extruderanlage und dem Punkt, an dem der elektrische Leitstreifen-Widerstand ermittelt wird, höchstens 10 Meter beträgt. Der Vorteil daran ist, dass ein Überschreiten des Maximal-Widerstands und ein - gemäß einer bevorzugten Ausführungsform vorgesehenes - Herausschneiden des Teils des Laufstreifens, in dem der Maximal-Widerstand überschritten ist, nur zu einem geringen Verlust an Leitstreifen führt. Zudem steigt die Qualität der Reifen, die mit dem Laufstreifen hergestellt werden.

Vorzugsweise wird der Laufstreifen nach seinem Austritt aus der Extruderanlage auf einem Förderer transportiert, wobei zunächst ein Teil des Förderers eine der Elektroden bildet. Beispielsweise ist der Förderer ein Rollenförderer, wobei die Rollen aus einem leitfähigen Material, insbesondere aus Metall, bestehen. Da der Laufstreifen so auf dem Förderer aufliegt, dass der Leitstreifen an seinem unteren Ende in elektrischem Kontakt mit dem Förderer ist, den Leitstreifen von der dem Förderer gegenüberliegenden Seite elektrisch zu kontaktieren.

Vorzugsweise weist die Außen-Elektrode und/oder die Innen-Elektrode eine Vielzahl an flexiblen, insbesondere haarförmigen und/oder zungenförmigen, Leitern auf. Diese Leiter stehen in elektrischem Kontakt mit dem Leitstreifen. Durch die Vielzahl der haarförmigen Leiter ist sichergestellt, dass stets einer der Leiter den Leitstreifen kontaktiert. Die einzelnen Leiter sind miteinander elektrisch verbunden, sodass es ausreicht, wenn einer der Leiter den Leitstreifen kontaktiert. Elektroden, die eine Vielzahl von solchen Leitern aufweisen, sind zudem mechanisch robust und damit wenig störungsanfällig. In anderen Worten ist die Außen-Elektrode und/oder die Innen-Elektrode vorzugsweise eine Bürsten-Elektrode. Die haarförmigen Leiter bilden dabei die Borsten der Bürste. Wenn eine AußenElektrode und/oder die Innen-Elektrode in Form einer Bürsten-Elektrode verwendet wird, ist es möglich, nicht aber notwendig, dass ein Teil des Förderers eine der Elektroden bildet.

Unter einem schlanken Leiter wird dabei insbesondere ein elektrischer Leiter verstanden, dessen Länge (also die Ausdehnung in eine Raumrichtung, nämlich die Längsrichtung) zumindest das 5-fache einer größten Ausdehnung quer zur Längsrichtung beträgt. Bei einem haarförmigen Leiter beträgt die Länge zumindest das 5-fach eines Durchmessers. Insbesondere ist der Leiter so steif, dass er mit einer so großen Kraft gegen den Leitstreifen drückt, dass ein elektrischer Kontakt aufgebaut wird. Günstig ist es, wenn die Leiter Karbonfasern oder Kohlenstofffasern aufweisen und/oder durch Karbonfasern gebildet sind. Diese beeinflussen die Oberfläche des Laufstreifens besonders wenig. Alternativ oder zusätzlich können die Leiter aus einem Metall aufgebaut sein oder dieses umfassen.

Vorzugsweise beträgt der elektrische Widerstand für einen der Leiter höchstens 10 Ohm, insbesondere höchstens 1 Ohm.

Alternativ oder zusätzlich weist die Außenelektrode- und/oder die Innenelektrode ein Rad auf, das mit dem Leitstreifen in elektrischem Kontakt steht. Vorteilhaft hieran ist, dass das Rad die Oberfläche des Laufstreifens besonders wenig beeinflusst.

Vorzugsweise wird der elektrische Widerstand stromfrei gemessen. Beispielsweise umfasst die Laufstreifen-Herstellvorrichtung eine Widerstands-Ermittlungsvorrichtung, die eine Wheatstone'sche Brückenschaltung enthält.

Das erfindungsgemäße Verfahren umfasst vorzugsweise den Schritt eines Aussonderns eines Bereichs des Laufstreifens, bei dem der Maximal-Widerstand überschritten ist. Das kann beispielsweise dadurch geschehen, dass der Laufstreifen so markiert wird, dass die Bereiche, bei denen der Maximal-Widerstand überschritten wird, bei der späteren Weiterverarbeitung nicht verwendet werden. Beispielsweise werden die entsprechenden Bereiche des Laufstreifens mit einer Farbe oder mechanisch markiert werden.

Alternativ oder zusätzlich kann der Bereich, in dem der Maximal-Widerstand überschritten wird, dadurch markiert werden, dass dessen Position aus der Geschwindigkeit, mit der der Leitstreifens sich bewegt, einerseits und den Zeitpunkten, zu denen das Überschreiten des Maximalwiderstands erfasst wird, andererseits bestimmt wird. Erreicht dieser Bereich eine Zuschneidevorrichtung, die gemäß einer bevorzugten Ausführungsform Teil einer erfindungsgemäßen Laufstreifen-Herstellvorrichtung ist, so wird dieser Bereich herausgeschnitten und nicht zur Fertigung von Reifen verwendet.

Vorzugsweise umfasst das Verfahren die Schritte eines Vulkanisierens des Leitstreifens zusammen mit einem Stahlgürtel, sodass ein Reifen entsteht, wobei der Leitstreifen in elektrischem Kontakt mit dem Stahlgürtel steht. Vorzugsweise ist der Leitstreifen und sind die sonstigen Komponenten, mit denen der Leitstreifen zusammen vulkanisiert wird, so ausgebildet, dass ein Gesamtwiderstand zwischen dem Bereich, der bei der späteren Verwendung in Kontakt mit der Felge steht, einerseits und dem Leitstreifen andererseits höchstens 100 MΩ, vorzugsweise höchstens 10 MΩ, beträgt.

Eine erfindungsgemäße Laufstreifen-Herstellvorrichtung weist vorzugsweise eine Fördervorrichtung auf, die in Materialflussrichtung hinter der Extruderanlage zum Fördern des Leitstreifens angeordnet ist. Günstig ist, wenn eine Elektrode durch die Fördervorrichtung gebildet ist, das ist aber nicht notwendig.

Vorzugsweise umfasst die Laufstreifen-Herstellvorrichtung eine Markiervorrichtung zum Markieren eines Bereichs des Laufstreifens, in dem der Maximal-Widerstand überschritten ist. Beispielsweise kann die Markiervorrichtung ausgebildet sein zum Markieren dieses Bereichs mittels Farbe. Beispielsweise wird die Farbe aufgesprüht oder aufgestrichen.

Alternativ oder zusätzlich weist die Laufstreifen-Herstellvorrichtung vorzugsweise eine Schneidevorrichtung zum Schneiden des Laufstreifens in Laufstreifenabschnitte auf, die ausgebildet ist zum Herausschneiden des markierten Bereichs. So ist sichergestellt, dass nur solche Bereiche des Leitstreifens zur Fertigung von Reifen verwendet werden, bei denen der Maximal-Widerstand nicht überschritten ist.

Im Folgenden wird die Erfindung anhand der beigefügten Zeichnungen näher erläutert. Dabei zeigt
- Figur 1: eine erfindungsgemäße Laufstreifen-Herstellvorrichtung in einem Horizontalschnitt,
- Figur 2: einen Querschnitt durch einen Leitstreifen, der mittels der Laufstreifen-Herstellvorrichtung hergestellt wird,
- Figur 3: eine Seitenansicht auf die Laufstreifen-Herstellvorrichtung gemäß Figur 1 und
- Figur 4: eine schematische Ansicht von der Seite auf eine Laufstreifen-Herstellvorrichtung gemäß einer zweiten Ausführungsform.
- Figur 5: zeigt eine Laufstreifen-Herstellvorrichtung gemäß einer zweiten Ausführungsform der Erfindung in einem Horizontalschnitt und
- Figur 6: zeigt eine Laufstreifen-Herstellvorrichtung gemäß einer dritten Ausführungsform der Erfindung in einem Horizontalschnitt.

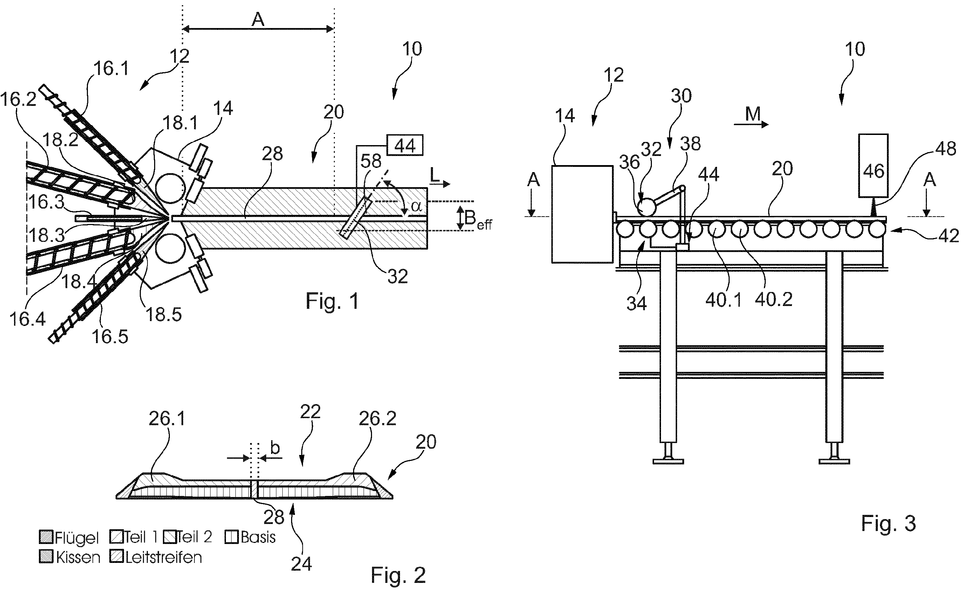

Figur 1 zeigt eine erfindungsgemäße Laufstreifen-Herstellvorrichtung 10, die eine Extruderanlage 12 umfasst. Die Extruderanlage 12 weist einen Kopf 14 sowie im vorliegenden Fall fünf Extruder 16.1, ..., 16.5 auf. Die Extruder 16.i (i = 1, 2, 3, 4, 5) fördern jeweils Kautschukmaterial und pressen dieses durch entsprechende Leitkanäle 18.i in den Kopf 14. Der Kopf 14 formt aus dem Kautschukmaterial einen Laufstreifen 20.

Figur 2 zeigt einen Querschnitt durch den Laufstreifen 20. Es ist zu erkennen, dass dieser eine Außenseite 22 und eine Innenseite 24 aufweist. Die Innenseite 24 weist in einem Reifen, der mittels des Laufstreifens 20 produziert wird, nach innen, die Außenseite 22 zur Straße hin.

Der Laufstreifen 20 besitzt einen Tragbereich 26, der im vorliegenden Fall aus den Tragbereich-Teilen 26.1, 26.2 zusammengesetzt ist. Im Tragbereich ist Tragbereich-Kautschukmaterial vorhanden. Tragbereich-Kautschukmaterial umfasst neben Kautschuk und gegebenenfalls Ruß und anderen Bestandteilen einen hohen Anteil an Siliziumdioxid. Beispielsweise beträgt der Anteil an Siliziumdioxid zumindest 10 Gewichtsprozent und höchstens 20 Gewichtsprozent. Dadurch besitzt der Tragbereich 26 eine hohe Abriebfestigkeit. Allerdings ist der spezifische elektrische Widerstand groß und beträgt beispielsweise mehr als ρ₂₆ = 10¹² Ω·m. Dieser Wert bezieht sich auf 20 °C.

Der Laufstreifen 20 besitzt zudem einen Leitstreifen 28 aus Leitstreifen-Kautschukmaterial, dessen elektrische Leitfähigkeit ρ₂₈ deutlich geringer ist und insbesondere höchstens 1/10 der elektrischen Leitfähigkeit ρ₂₆ des Tragbereich-Kautschukmaterials beträgt. Ein elektrischer Widerstand W₂₈ des Laufstreifens zwischen der Außenseite 22 und der Innenseite 24 beträgt vorzugsweise höchstens W₂₈ = 100 MΩ, insbesondere höchstens W₂₈ = 10 MΩ.

Figur 3 zeigt die Laufstreifen-Herstellvorrichtung 10 in einer schematischen Ansicht von der Seite. Es ist zu erkennen, dass die Laufstreifen-Herstellvorrichtung 10 eine Widerstands-Ermittlungsvorrichtung 30 aufweist, die eine Außenelektrode 32 und eine Innenelektrode 34 aufweist. Die Außenelektrode 32 umfasst ein Rad 36, das elektrisch leitend an einem Arm 38 befestigt ist. Die Innenelektrode 34 ist durch zumindest eine Tragrolle 40.1 einer Fördervorrichtung 42 gebildet. Die Fördervorrichtung 42 transportiert den Laufstreifen 20 vom Kopf 14 (vgl. Figur 1) weg. Eine Auswerteschaltung 44 ermittelt den elektrischen Widerstand W₂₈ zwischen der Außenelektrode 32 und der Innenelektrode 34, der in sehr guter Näherung dem Widerstand des Leitstreifens 28 (vgl. Fig. 2) entspricht.

Die Elektroden 32, 34 sind bezüglich einer Materialflussrichtung M dicht hinter dem Kopf 14 angeordnet. Wird von der Auswerteschaltung 44 ein elektrischer Widerstand W₂₈ ermittelt, der größer ist als ein vorgegebener Maximal-Widerstand W_{28,max}, so gibt diese ein Warnsignal aus.

Das Warnsignal kann beispielsweise ein elektrisches Signal an eine Steuereinheit sein, die auch die Extruderanlage 12 steuert. Alternativ handelt es sich um ein akustisches und/oder optisches Signal, sodass ein Maschinenbediener den Fehler erkennen kann. Wiederum alternativ oder zusätzlich ist die Auswertehaltung 44 drahtlos oder drahtgebunden mit einer schematisch eingezeichneten Markiervorrichtung 46 verbunden, die in diesem Fall Farbe 48 auf den Laufstreifen 20 aufbringt, insbesondere aufsprüht. Auf diese Weise wird der Abschnitt des Laufstreifens markiert, der möglicherweise nicht zur Fertigung von Reifen verwendet werden kann.

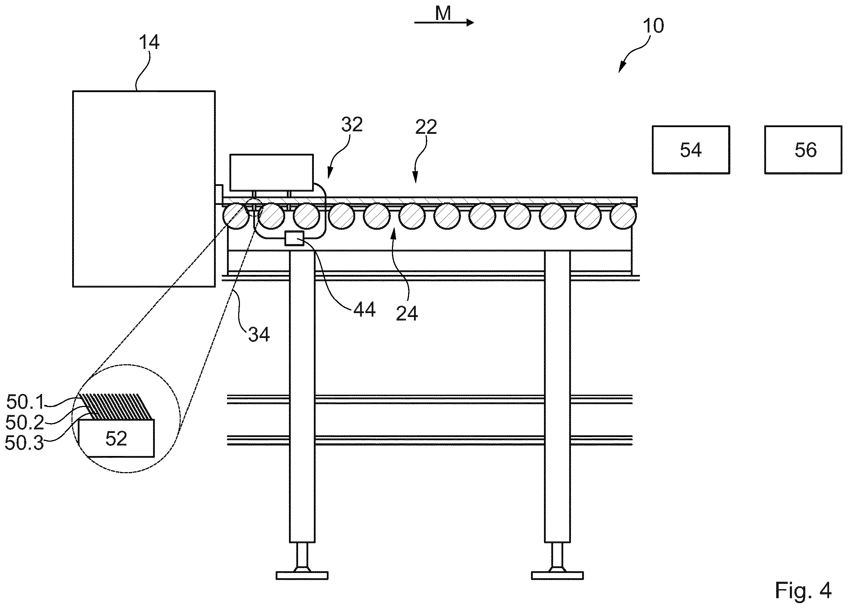

Figur 4 zeigt eine schematische Seitenansicht einer Laufstreifen-Herstellvorrichtung 10 gemäß einer zweiten Ausführungsform der Erfindung. Es ist zu erkennen, dass sowohl die Außenelektrode 32 als auch die Innenelektrode 34 eine Vielzahl an haarförmigen Leitern 50.1, 50.2, ... aufweist, die in einem Block 50 zusammengefasst und so elektrisch kontaktiert sind. Die Leiter 50.j (j = 1, 2, ...) streifen von der Außenseite 22 und von der Innenseite 24 an den Leitstreifen 28 vorbei und kontaktieren ihm so. Die Auswertung erfolgt wie oben beschrieben.

Rein schematisch sind eine Schneideanlage 54 und eine Vulkanisiervorrichtung 56 eingezeichnet, die dazu dienen, unter Verwendung des Laufstreifens 20 Reifen herzustellen.

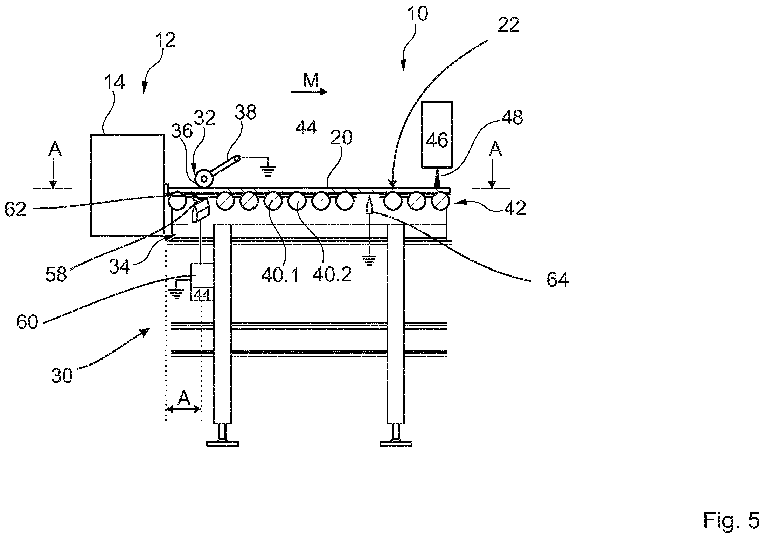

Figur 5 zeigt eine weitere erfindungsgemäße Laufstreifen-Herstellvorrichtung 10, bei der eine Elektrode, im vorliegenden Fall die Außen-Elektrode 32, zum Erden des Laufstreifens 20 und insbesondere des Leitstreifens 28 angeordnet ist.

Es sei darauf hingewiesen, dass in der gesamten Beschreibung die Orientierung des Laufstreifens 20 auch andersherum sein kein. In anderen Worten ergibt sich für die Struktur der Laufstreifen-Herstellvorrichtung keine Änderung, wenn der Laufstreifen nicht mit seiner Außenseite 22 nach oben auf Fördervorrichtung 42 aufliegt, sondern mit der Außenseite 22 nach unten. Die Außen-Elektrode 32 könnte daher auch erste Elektrode genannt werden, die Innen-Elektrode 34 könnte auch zweite Elektrode genannt werden. Die Begriffe Außen-Elektrode und Innen-Elektrode werden lediglich der Einfachheit halber verwendet.

Die Laufstreifen-Herstellvorrichtung 10 besitzt eine Innen-Elektrode 34, die zum berührungslosen Kontaktieren des Laufstreifens 20 ausgebildet ist. Die Innen-Elektrode 34 besitzt eine Emissionskante 58 und ist mit einer Hochspannungsquelle 60 verbunden. Die Hochspannungsquelle gibt im vorliegenden Fall eine Spannung U, die auch als Aufbringspannung bezeichnet werden kann, in Höhe von U = 3 kV ab. Von der Emissionskante 58 werden daher Elektronen 62 auf den Laufstreifen 20 aufgebracht.

Ist der Leitstreifen 28 (vgl. Fig. 2) korrekt ausgebildet, so ist sein elektrischer Widerstand W₂₈ kleiner als der vorgegebene Maximal-Widerstand W_{28,max}. Das führt dazu, dass sich ein elektrischer Strom I zwischen der Innen-Elektrode 34 und der Außen-Elektrode 32 einstellt. Im vorliegenden Fall ist die Außen-Elektrode 32 geerdet und die Hochspannungsquelle 60 erzeugt eine Spannung ebenfalls gegenüber Erde. Alternativ ist es möglich, dass die Außen-Elektrode direkt mit der Hochspannungsquelle 60 verbunden ist.

Der elektrische Strom I wird von der Auswerteschaltung erfasst, die mit der Hochspannungsquelle 60 verbunden ist. Es ist auch möglich, dass die Hochspannungsquelle 60 Teil der Auswerteschaltung 44 ist. Je größer der elektrische Strom E ist, desto geringer ist der elektrische Widerstand W₂₈ des Leitstreifens 28.

Ist der Leitstreifen 28 fehlerhaft, das heißt dass, er einen zu hohen elektrischen Widerstand hat, so sammeln sich die Elektronen 62 dauerhaft auf dem Laufstreifen 20 an. Sie bildet dort eine dauerhaft verbleibende elektrische Ladung Q. Diese Ladung Q führt zu einem elektrischen Feld, das sich mit dem elektrischen Feld der Innen-Elektrode überlagert und dazu führt, dass der Strom I kleiner wird. Der Strom I ist daher ein Parameter P, anhand dessen der Leitstreifen-Widerstand beurteilt werden kann. Unterschreitet der Parameter P, für den im vorliegenden Fall P = I gilt, einen Minimal-Wert Iₘᵢₙ, so ist dies ein Anzeichen dafür, dass der Leitstreifen-Widerstand W₂₈ den vorgegebenen Maximal-Wert W_{28,max} unterschritten hat. Es wird dann ein Warnsignal ausgegeben.

In Materialflussrichtung M hinter den Elektroden 32, 34 ist eine Entlade-Elektrode 64 angeordnet, mittels der der Laufstreifen 20 weitgehend entladen wird. Es ist möglich und bevorzugt, dass die Entlade-Elektrode wie im vorliegenden Fall berührungslos arbeitet. Es ist aber auch möglich, dass die Entlade-Elektrode 64 berührend arbeitet.

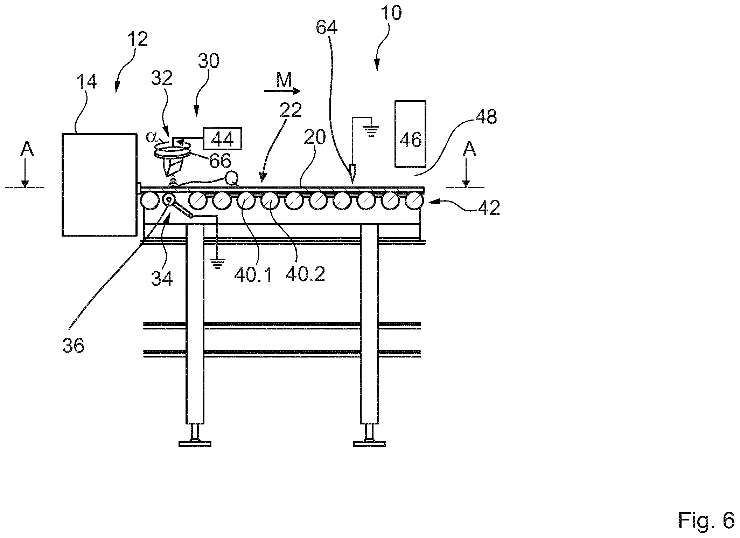

Figur 6 zeigt eine weitere alternativ Ausführungsform einer erfindungsgemäßen Laufstreifen-Herstellvorrichtung 10, bei der die Außen-Elektrode als berührungslose Elektrode ausgebildet ist. Diese bringt die elektrische Ladung Q auf die Außenseite 22 des Laufstreifens 20 auf. Der Laufstreifen wird mittels der Innen-Elektrode 34 geerdet, die im vorliegenden Fall wie oben beschrieben ein Rad 36 aufweist, das den Leitstreifen 28 (vgl. Fig. 2) berührt.

Figur 1 zeigt eine schematische Ansicht von oben auf die Außen-Elektrode 32. Es ist zu erkennen, dass sich die Emissionskante 58 quer zu einer Längsrichtung L des Laufstreifens 20 erstreckt. In anderen Worten beträgt ein Versatzwinkel a im vorliegenden Fall vorzugsweise zumindest höchstens 75° und höchstens 105°.

Die Elektrode ist mittels einer Drehvorrichtung 66 (vgl. Fig. 6) so drehbar, dass der Versatzwinkel a einstellbar ist. Auf diese Weise ist der Versatzwinkel a und damit eine effektive Breite B_{eff} der Außen-Elektrode 32 variierbar. Günstig ist es, wenn die effektive Breite B_{eff} größer ist als die Breite b des Leitstreifens 28. Günstig ist jedoch auch, wenn die effektive Breite B_{eff} zumindest das Dreifache, vorzugsweise zumindest das Fünffache, der Breite b des Leitstreifens 28. Günstig ist es in der Regel, wenn die effektive Breite B_{eff} höchstens das 50-fache, insbesondere das 30-fache, der Breite b des Leitstreifens beträgt.

Die Auswerteschaltung 44 vergleicht kontinuierlich, ob der Parameter P, im vorliegenden Fall der elektrische Strom I, einen Wert hat, der anzeigt, dass der Leitstreifen-Widerstand W₂₈ den vorgegebenen Maximal-Wert W_{28,max} nicht überschreitet. Ist der Parameter P der elektrische Ladestrom I, so bedeutet ein Unterschreiten eines Minimal-Stroms Iₘᵢₙ, dass der Leitstreifen-Widerstand W₂₈ den vorgegebenen Maximal-Wert W_{28,max} überschreitet. Beispielsweise wird der elektrische Strom I zumindest einmal pro Sekunde, vorzugsweise zumindest einmal pro Zehntelsekunde, ermittelt.

Die Ladung Q kann - wie oben beschrieben - in Form von Elektronen aufgebracht werden. Alternativ ist es auch möglich, dass die jeweilige Elektrode als lonensprühstab ausgebildet ist, der Ionen auf den Laufstreifen 20 zu beschleunigt und diesen so elektrostatisch auflädt.

### Bezugszeichenliste

- 10: Laufstreifen-Herstellvorrichtung
- 12: Extruderanlage
- 14: Kopf
- 16: Extruder
- 20: Laufstreifen
- 22: Außenseite
- 24: Innenseite
- 26: Tragbereich
- 28: Leitstreifen
- 30: Widerstands-Ermittlungsvorrichtung
- 32: Außen-Elektrode
- 34: Innen-Elektrode
- 36: Rad
- 38: Arm
- 40: Tragrolle
- 42: Fördervorrichtung
- 44: Auswerteschaltung
- 46: Markiervorrichtung
- 48: Farbe
- 50: Leiter
- 52: Block
- 54: Schneideanlage
- 56: Vulkanisiervorrichtung
- 58: Emissionskante
- 60: Hochspannungsquelle
- 62: Elektronen
- 64: Entlade-Elektrode
- 66: Drehvorrichtung
- A: Abstand von Extruderauslass zu Elektrode
- α: Versatzwinkel
- B: Breite des Leitstreifens
- i: Laufindex
- I: elektrischer Strom
- Iₘᵢₙ: Minimal-Strom
- M: Materialflussrichtung
- P: Parameter
- Q: elektrostatische Ladung
- U: Spannung (=Aufbringspannung)
- W₂₈: Elektrischer Widerstand des Laufstreifens
- W_{28,max}: Maximal-Widerstand
- p: spezifischer elektrische Widerstand

## Patentansprüche

1. Verfahren zum Herstellen eines Laufstreifens (20), mit den Schritten:
(a) Extrudieren des Laufstreifens (20), der
- eine Außenseite (22) und eine der Außenseite (22) gegenüber liegende Innenseite (24) hat und
- einen Tragbereich (26) aus einem Tragbereich-Kautschukmaterial
- und einen Leitstreifen (28) aus einem Leitstreifen-Kautschukmaterial aufweist,
(b) wobei sich der Leitstreifen (28) von der Außenseite (22) zur Innenseite (24) erstreckt und ein spezifischer elektrischer Leitstreifen-Widerstand (ρ₂₈) des Leitstreifen-Kautschukmaterials kleiner ist als ein spezifischer elektrischer Tragbereich-Widerstand (ρ₂₆) des Tragbereich-Kautschukmaterials,
(c) Ermitteln eines Parameters (P), der zu einem elektrischen Leitstreifen-Widerstands (W₂₈) des Leitstreifens (28) zwischen der Außenseite (22) und der Innenseite (24) korreliert,
(d) wobei das Ermitteln des Parameters (P) den Schritt Aufbringen einer elektrostatischen Ladung (Q) auf einer Seite (22, 24) umfasst, und
(e) der Parameter (P) einen Ladestrom (I), der beim der Aufbringen elektrostatischen Ladung (Q) entsteht, beschreibt, und
(f) Ausgeben eines Warnsignals, wenn der Parameter (P) einen Wert annimmt, der anzeigt, dass der Leitstreifen-Widerstand (W₂₈) einen vorgegebenen Maximal-Wert (W_{28,max}) überschreitet, **gekennzeichnet dadurch, dass** das Aufbringen der elektrostatischen Ladung (Q) berührungslos erfolgt.

2. Verfahren nach dem vorstehenden Anspruch, **dadurch gekennzeichnet, dass** das Ermitteln des Leitstreifen-Widerstands (W₂₈) die folgenden Schritte umfasst:
Kontaktieren der Außenseite (22) mittels einer Außen-Elektrode (32) und
Kontaktieren der Innenseite (24) mittels einer Innen-Elektrode (34),
wobei eine der Elektroden (32, 34) den Laufstreifen (20) von oben kontaktiert.

3. Verfahren nach Anspruch 1 oder 2, **dadurch gekennzeichnet, dass** eine Spannung (U) beim Aufbringen der Ladung zumindest 3 kV beträgt.

4. Verfahren nach einem der Ansprüche 1 bis 3, **dadurch gekennzeichnet, dass**
- die Elektrode (32, 43), mittels der die Ladung aufgebracht wird, eine Emissionskante (58) aufweist, und dass
- die Elektrode (32, 34) so drehbar ist, dass eine effektive Breite (B_{eff}) der Elektrode (32, 34) veränderbar ist.

5. Verfahren nach einem der vorstehenden Ansprüche, **dadurch gekennzeichnet, dass** ein Bereich des Laufstreifens (20), bei dem der Maximal-Widerstand (W_{28,max}) überschritten ist, ausgesondert wird.

6. Laufstreifen-Herstellvorrichtung (10) zum Herstellen eines Laufstreifens (20) mit
(a) einer Extruderanlage (12), die ausgebildet ist zum Herstellen eines Laufstreifens (20), der
- eine Außenseite (22) und eine der Außenseite (22) gegenüber liegende Innenseite (24) hat und
- einen Tragbereich (26) aus einem Tragbereich-Kautschukmaterial und
- einen Leitstreifen (28) aus einem Leitstreifen-Kautschukmaterial aufweist,
- wobei sich der Leitstreifen (28) von der Außenseite (22) zur Innenseite (24) erstreckt,
(b) eine Widerstands-Ermittlungsvorrichtung (30), die
- eine Außen-Elektrode (32), die angeordnet ist zum Kontaktieren der Außenseite (22) des Laufstreifens (20), und
- eine Innen-Elektrode (34), die angeordnet ist zum Kontaktieren der Innenseite (24) des Laufstreifens (20), aufweist
(c) wobei die Widerstands-Ermittlungsvorrichtung (30) ausgebildet ist zum automatischen Messen eines zu einem Leitstreifen-Widerstand (W₂₈) des Leitstreifens (28) zwischen der Außenseite (22) und der Innenseite (24) korrelierenden Parameters (P), der einen Ladestrom (I), der beim der Aufbringen elektrostatischen Ladung (Q) entsteht, beschreibt, mittels der Elektroden (32, 34),
**gekennzeichnet dadurch, dass**
- die Widerstands-Ermittlungsvorrichtung (30) ausgebildet ist zum berührungslosen Aufbringen einer elektrostatischen Ladung (Q) auf eine Seite (22, 24) des Laufstreifens (20).

7. Laufstreifen-Herstellvorrichtung (10) nach Anspruch 6, **dadurch gekennzeichnet, dass**
- die Elektrode (32, 34), mittels der die Ladung aufgebracht wird, eine Emissionskante (58) aufweist, und dass
- die Elektrode (32, 34) so drehbar ist, dass eine effektive Breite (B_{eff}) der Elektrode (32, 34) veränderbar ist.

8. Laufstreifen-Herstellvorrichtung (10) nach einem der Ansprüche 6 bis 7,
**gekennzeichnet durch** eine Auswerteschaltung (44), die ausgebildet ist zum automatischen Durchführen eines Verfahrens mit den Schritten:
(i) automatisches Erfassen eines Ladestroms (I) beim Aufbringen der Ladung (Q) und
(ii) Ausgeben eines Warnsignals, wenn der Ladestrom (I) einen Wert (Iₘᵢₙ) annimmt, der anzeigt, dass ein Leitstreifen-Widerstand (W₂₈) einen vorgegebenen Maximal-Wert (W_{28,max}) überschreitet.

## Claims

1. A method for producing a tread strip (20), comprising the steps:
(a) extruding the tread strip (20), which has
- an outer side (22) and an inner side (24), opposite the outer side (22), and
- a carrying region (26) made of a carrying region rubber material
- and a guide strip (28) made of a guide strip rubber material,
(b) wherein the guide strip (28) extends from the outer side (22) to the inner side (24) and a specific electrical guide strip resistance (ρ₂₈) of the guide strip rubber material is smaller than a specific electrical carrying region resistance (ρ₂₆) of the carrying region rubber material,
(c) determining a parameter (P), which correlates to an electrical guide strip resistance (W₂₈) of the guide strip (28) between the outer side (22) and the inner side (24),
(d) wherein the determining of the parameter (P) comprises the step of applying an electrostatic charge (Q) on a side (22, 24),
(e) the parameter (P) describes a charging current (I), which arises on applying the electrostatic charge (Q), and
(f) emitting a warning signal when the parameter (P) assumes a value which indicates that the guide strip resistance (W₂₈) exceeds a specified maximum value (W_{28,max}),
**characterized in that** the applying of the electrostatic charge (Q) takes place in a contactless manner.

2. The method according to the preceding claim, **characterized in that** the determining of the guide strip resistance (W₂₈) comprises the following steps:
contacting the outer side (22) by means of an outer electrode (32) and
contacting the inner side (24) by means of an inner electrode (34),
wherein one of the electrodes (32, 34) contacts the tread strip (20) from above.

3. The method according to Claim 1 or 2, **characterized in that** a voltage (U) on applying of the charge measures at least 3 kV.

4. The method according to one of Claims 1 to 3, **characterized in that**
- the electrode (32, 43), by means of which the charge is applied, has an emission edge (58), and that
- the electrode (32, 34) is rotatable so that an effective width (B_{eff}) of the electrode (32, 34) is able to be changed.

5. The method according to one of the preceding claims, **characterized in that** a region of the tread strip (20), at which the maximum resistance (W_{28,max}) is exceeded, is eliminated.

6. A tread strip production device (10) for producing a tread strip (20) with
(a) an extruder system (12), which is designed to produce a tread strip (20), which
- has an outer side (22) and an inner side (24) opposite the outer side (22) and
- a carrying region (26) made of a carrying region rubber material and
- a guide strip (28) made of a guide strip rubber material,
- wherein the guide strip (28) extends from the outer side (22) to the inner side (24),
(b) a resistance determining device (30), which has
- an outer electrode (32), which is arranged for contacting the outer side (22) of the tread strip (20), and
- an inner electrode (34), which is arranged for contacting the inner side (24) of the tread strip (20)
(c) wherein the resistance determining device (30) is designed for the automatic measuring of a parameter (P) correlating to a guide strip resistance (W₂₈) of the guide strip (28) between the outer side (22) and the inner side (24), which describes a charging current (I) which arises on applying the electrostatic charge (Q), by means of the electrodes (32, 34), **characterized in that**
- the resistance determining device (30) is designed for the contactless applying of an electrostatic charge (Q) onto a side (22, 24) of the tread strip (20).

7. The tread strip production device (10) according to Claim 6, **characterized in that**
- the electrode (32, 34), by means of which the charge is applied, has an emission edge (58), and that
- the electrode (32, 34) is rotatable so that an effective width (B_{eff}) of the electrode (32, 34) is able to be changed.

8. The tread strip production device (10) according to one of Claims 6 to 7,
**characterized by** an evaluation circuit (44), which is designed for the automatic carrying out of a method comprising the steps:
(i) automatic detecting of a charging current (I) on applying of the charge (Q) and
(ii) emitting a warning signal when the charging current (I) assumes a value (Iₘᵢₙ) which indicates that a guide strip resistance (W₂₈) exceeds a specified maximum value (W_{28,max}).

## Revendications

1. Procédé de fabrication d'une bande de roulement (20) comprenant les étapes :
(a) d'extrusion de la bande de roulement (20) qui
- a une face extérieure (22) et une face intérieure (24) opposée à la face extérieure (22) et
- présente une partie porteuse (26) constituée d'un matériau de caoutchouc de partie porteuse
- et présente une bande de guidage (28) constituée d'un matériau de caoutchouc de bande de guidage,
(b) dans lequel la bande de guidage (28) s'étend de la face extérieure (22) vers la face intérieure (24), et une résistance de bande de guidage (ρ₂₈) électrique spécifique du matériau de caoutchouc de bande de guidage est inférieure à une résistance de partie porteuse (ρ₂₆) électrique spécifique du matériau de caoutchouc de partie porteuse,
(c) détermination d'un paramètre (P) qui établit une corrélation vers une résistance électrique de bande de guidage (W₂₈) de la bande de guidage (28) entre la face extérieure (22) et la face intérieure (24),
(d) dans lequel la détermination du paramètre (P) comprend l'étape d'appliquer une charge électrostatique (Q) sur une face (22, 24),
(e) le paramètre (P) décrit un courant de charge (I) qui se produit lors de l'application de la charge électrostatique (Q), et
(f) d'émission d'un signal d'avertissement lorsque le paramètre (P) adopte une valeur qui indique que la résistance de bande de guidage (W₂₈) dépasse une valeur maximale (W_{28,max}) prédéfinie, **caractérisé en ce que** l'application de la charge électrostatique (Q) se fait sans contact.

2. Procédé selon la revendication précédente, **caractérisé en ce que** la détermination de la résistance de bande de guidage (W₂₈) comprend les étapes suivantes :
mise en contact de la face extérieure (22) au moyen d'une électrode extérieure (32) et
mise en contact de la face intérieure (24) au moyen d'une électrode intérieure (34),
dans lequel une des électrodes (32, 34) contacte la bande de roulement (20) par le haut.

3. Procédé selon la revendication 1 ou 2, **caractérisé en ce qu'**une tension (U) à l'application de la charge, fait au moins 3 kV.

4. Procédé selon l'une des revendications 1 à 3, **caractérisé en ce que**
- l'électrode (32, 43) au moyen de laquelle la charge est appliquée, présente un bord d'émission (58) et que
- l'électrode (32, 43) peut ainsi tourner qu'une largeur (B_{eff}) effective de l'électrode (32, 34) peut être modifiée.

5. Procédé selon l'une des revendications précédentes, **caractérisé en ce qu'**une partie de la bande de roulement (20) dans laquelle la résistance maximale (W_{28, max}) est dépassée, est retirée.

6. Dispositif de fabrication de bande de roulement (10) pour fabriquer une bande de roulement (20) comprenant
(a) une installation d'extrudeuse (12) qui est conçue pour fabriquer une bande de roulement (20) qui
- a une face extérieure (22) et une face intérieure (24) opposée à la face extérieure (22) et
- présente une partie porteuse (26) constituée d'un matériau de caoutchouc de partie porteuse
- et présente une bande de guidage (28) constituée d'un matériau de caoutchouc de bande de guidage,
- dans lequel la bande de guidage (28) s'étend de la face extérieure (22) vers la face intérieure (24),
(b) un dispositif de détermination de résistance (30), qui
- présente une électrode extérieure (32) qui est disposée pour la mise en contact de la face extérieure (22) de la bande de roulement (20), et
- une électrode intérieure (34) qui est disposée pour la mise en contact de la face intérieure (24) de la bande de roulement (20),
(c) dans lequel le dispositif de détermination de résistance (30) est conçu pour mesurer automatiquement un paramètre (P) qui établit une corrélation vers une résistance de bande de guidage (W₂₈) de la bande de guidage (28) entre la face extérieure (22) et la face intérieure (24), qui décrit un courant de charge (I) qui se produit lors de l'application de la charge électrostatique (Q), au moyen des électrodes (32, 34), **caractérisé en ce que**
- le dispositif de détermination de résistance (30) est conçu pour l'application sans contact d'une charge électrostatique (Q) sur une face (22, 24), de la bande de roulement (20) .

7. Dispositif de fabrication de bande de roulement (10) selon la revendication 6, **caractérisé en ce que**
- l'électrode (32, 34) au moyen de laquelle la charge est appliquée, présente un bord d'émission (58) et que
- l'électrode (32, 34) peut ainsi tourner qu'une largeur (B_{eff}) effective de l'électrode (32, 34) peut être modifiée.

8. Dispositif de fabrication de bande de roulement (10) selon l'une des revendications 6 à 7,
**caractérisé par** un dispositif d'évaluation (44) qui est conçu pour exécuter automatiquement un procédé comprenant les étapes :
(i) de détection automatique d'un courant de charge (I) à l'application de la charge (Q) et
(ii) d'émission d'un signal d'avertissement lorsque le courant de charge (Iₘᵢₙ) adopte une valeur qui indique qu'une résistance de bande de guidage (W₂₈) dépasse une valeur maximale (W_{28, max}) prédéfinie.
